(19) Europäisches Patentamt
European Patent Office
Office européen des brevets

(11) EP 2 843 866 B1

(12) **EUROPEAN PATENT SPECIFICATION**

(45) Date of publication and mention
of the grant of the patent:
**27.09.2017 Bulletin 2017/39**

(51) Int Cl.:
*H04L 1/12* (2006.01)   *H04L 1/20* (2006.01)
*H04L 1/16* (2006.01)   *H04L 1/18* (2006.01)
*H04L 1/00* (2006.01)

(21) Application number: **12875323.3**

(22) Date of filing: **19.07.2012**

(86) International application number:
**PCT/CN2012/078898**

(87) International publication number:
**WO 2013/159463 (31.10.2013 Gazette 2013/44)**

(54) **METHOD AND APPARATUS FOR ADJUSTING DOWNLINK RELATED PARAMETERS ON BASIS OF FEEDBACK AMBIGUITY**

VERFAHREN UND VORRICHTUNG ZUR EINSTELLUNG VON DOWNLINK-ASSOZIIERTEN PARAMETERN AUF DER BASIS VON FEEDBACK-AMBIGUITÄT

PROCÉDÉ ET APPAREIL POUR RÉGLER DES PARAMÈTRES LIÉS À LA LIAISON DESCENDANTE SUR LA BASE D'UNE AMBIGÜITÉ DE RÉTROACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2012 CN 201210127581**

(43) Date of publication of application:
**04.03.2015 Bulletin 2015/10**

(73) Proprietor: **ZTE Corporation**
**Shenzhen, Guangdong 518057 (CN)**

(72) Inventors:
• **LIU, Xuebin**
**Shenzhen**
**Guangdong 518057 (CN)**
• **DONG, Hui**
**Shenzhen**
**Guangdong 518057 (CN)**

(74) Representative: **Carangelo, Pierluigi et al**
**Jacobacci & Partners S.p.A.**
**Via Tomacelli 146**
**00186 Roma (IT)**

(56) References cited:
**EP-A1- 2 309 787     WO-A1-2012/044988**
**CN-A- 1 951 042      CN-A- 102 075 310**
**CN-A- 102 377 540    CN-A- 102 684 853**

• **"ETSI TS 136 213 V10.2.0 (2011-06), LTE; Evolved Universal Terrestrial Radio Access (E-UTRA); Physical layer procedures, Chapter 10", , 1 June 2011 (2011-06-01), pages 92-114, XP055171829, 650 Route des Lucioles F-06921 Sophia Antipolis Cedex - FRANCE Retrieved from the Internet: URL:http://www.etsi.org/deliver/etsi_ts/13 6200_136299/136213/10.02.00_60/ts_136213v1 00200p.pdf [retrieved on 2015-02-24]**

**Description**

**Technical Field**

The present invention relates to the field of communications, and in particular to a method and apparatus for adjusting a downlink related parameter based on feedback ambiguity.

**Background**

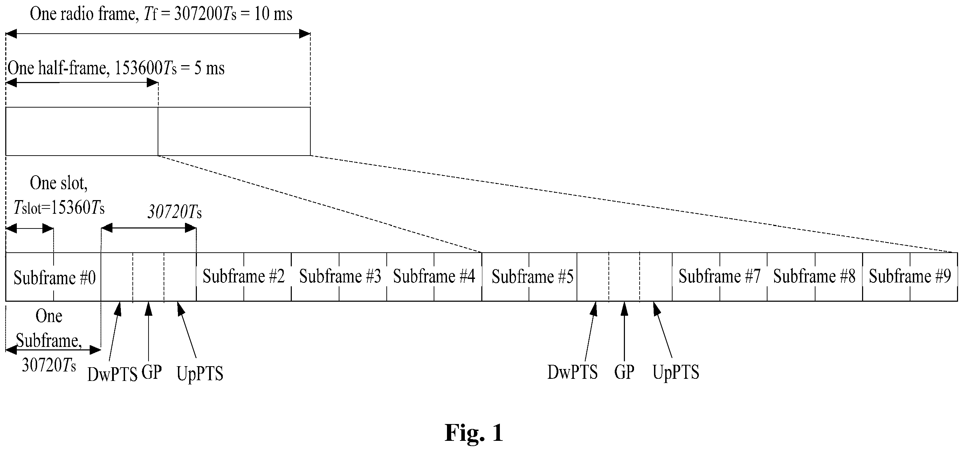

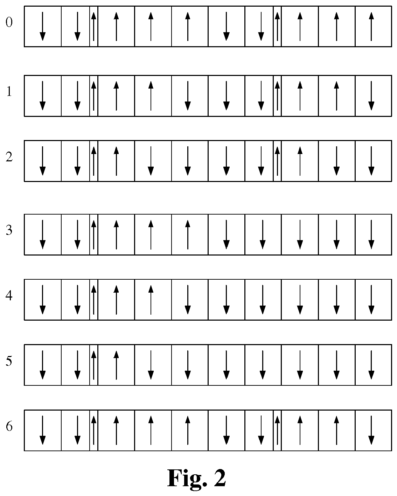

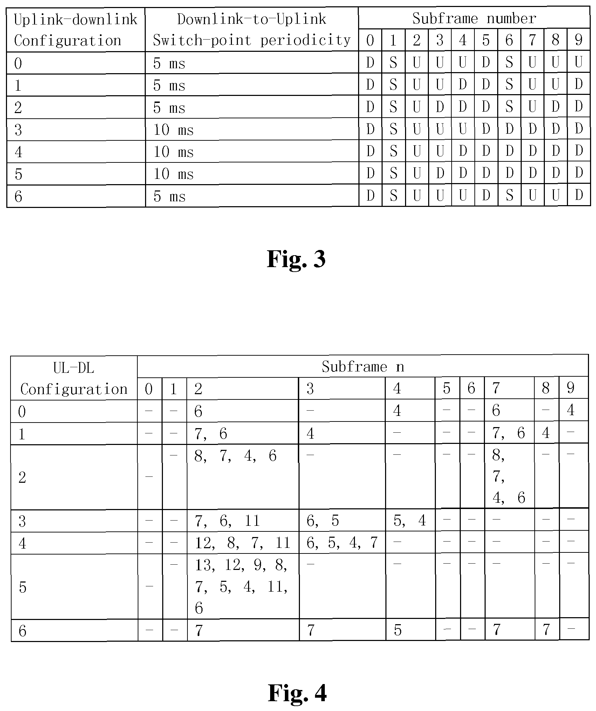

LTE TDD (Time Division Duplexing) is a branch of LTE (Long Term Evolution). The frame structure (type 2) of LTE TDD is as shown in Fig. 1. Each radio frame of 10 ms includes 2 half frames of 5 ms, and each half frame consists of 4 data subframes and 1 special subframe. The special subframe includes one downlink pilot time slot (DwPTS), one guard pilot (GP) time slot and one uplink pilot time slot (UpPTS), i.e., three special time slots in total. Since the radio frame can support a plurality of uplink-to-downlink ratios, as shown in Fig. 2 and Fig. 3, this type of radio frame is more appropriate for a mobile network with "asymmetric uplink and downlink services". For example, for a commercial service mode where a downlink service traffic is larger than an uplink service traffic, the uplink-to-downlink ratio of the LTE TDD may be set to 1 or 2, that is, UL : DL = 2 : 2 or 1 : 3, which is the typical configuration of LTE TDD network throughout the world at present. Since a special subframe is usually configured to be 7, that is DL : GAP : UL = 10 : 2 : 2, the special subframe can also effectively transmit downlink data. Therefore, under the above-mentioned configuration, the uplink-to-downlink ratio can also be considered as UL : DL = 2 : 3 and 1 : 4.

Due to the asymmetrical configuration at the uplink and downlink in the LTE TDD, there may be such a case that a UE (user equipment) uses the PUCCH (Physical Uplink Control Channel) or PUSCH (Physical Uplink Shared Channel) of a small amount of uplink subframes to feed back the demodulation result ACK (Acknowledgement)/NACK (Negative-Acknowledgement) of the PDSCH (Physical Downlink Shared Channel) of more downlink subframes. As shown in Fig. 4 (with reference to standard protocol TS36213), M if the number of downlink subframes, and K refers to the ACK/NACK of which one or more subframes in the previous subframes is fed back by the uplink subframe. When the uplink-to-downlink ratio is set to 2, one uplink subframe is required to feed back the demodulation result of at most 4 downlink subframes, so does the case where the uplink-to-downlink ratio is set to 4. However, for the case where the uplink-to-downlink ratio is set to 5, one uplink subframe is required to feed back the demodulation result of at most 9 downlink subframes. Taking the case where the uplink-to-downlink ratio is set to 4 as an example, there are 2 uplink subframes in total, which are subframe 2 and subframe 3 respectively, wherein subframe 2 feeds back the ACK/NACK of the 12th, 8th, 7th and 11th downlink subframes there before, and subframe 3 feeds back the ACK/NACK of the 6th, 5th, 4th and 7th downlink subframe there before.

When the UE is scheduled and allocated with PUSCH resources, the UE may need to feed back the ACK/NACK over the PUSCH, in this case the ACK/NACK will be multiplexed over the PUSCH for transmission, together with the CQI (Channel Quality Indicator), PMI (Precoding Matrix Indicator), RI (Rank Indicator) and data.

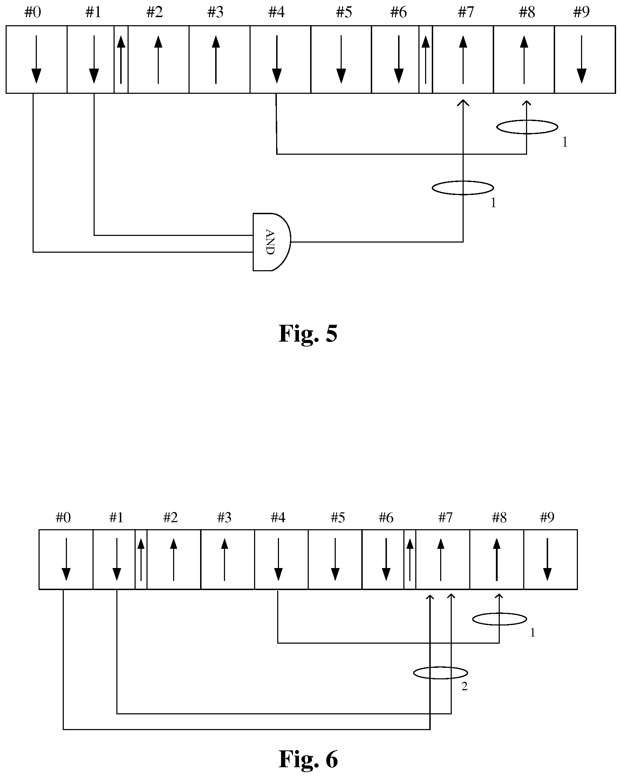

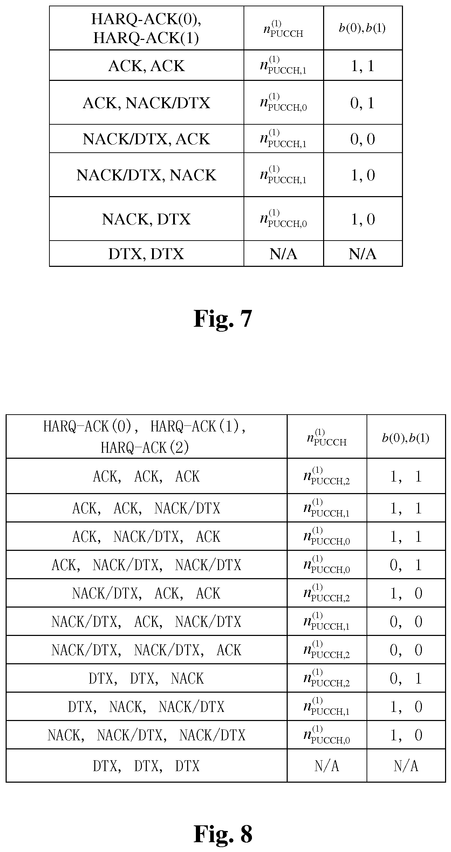

The standard protocols TS36212, TS36213 have proposed two feedback manners directed at the ACK/NACK of the PDSCH of the LTE TDD, which are Bundling and Multiplexing. As shown in Fig. 5, in the Bundling manner, the UE performs logical "AND" operation on the ACK/NACK of each codeword on each subframe of the PDSCH received thereby, and then feeds back same to the eNB through the PUCCH or PUSCH. Regardless of whether the feedback is performed through the PUCCH or the PUSCH, for a single codeword, one bit is used for the feedback, and for double codewords, 2 bits are used for the feed back, that is, the "and" operation result of the ACK/NACK of each codeword is fed back with one bit. For the case where the uplink-to-downlink ratio is set to 5, that is, UL : DL = 1 : 9, it is specified in the protocol that only Bundling can be used. As shown in Fig. 6, in the Multiplexing manner, the UE performs logical "AND" operation on the ACK/NACK of each codeword on each subframe of the PDSCH received thereby, and then feeds back same to the eNB through the PUCCH or PUSCH. If feedback is performed over the PUSCH, the UE will feed back 1-4 bits according to the number of the received downlink subframes (at most 4). If the feedback is performed on the PUCCH, regardless of the number of subframes received by the UE is 1, 2, 3 or 4, 2 bits are used to perform the feedback, please see the mapping relationship in Fig. 7, Fig. 8 and Fig. 9 (see the standard protocol TS36213).

When the Multiplexing manner is adopted and M = 1 (see standard TS36213), that is when the UE uses one uplink subframe to feed back the ACK/NACK of one downlink subframe, if double codewords are received by the UE and the feedback is performed over the PUCCH, 2 bits will be used to perform the feedback, and the ACK/NACK of each of the two codewords will be fed back with one bit respectively, without being subjected to logical "AND" operation. This is a special case. It is seen from Fig. 4 that this special case only exists for subframe 3 and subframe 8 in uplink-to-downlink ratio 0, uplink-to-downlink ratio 6 and uplink-to-downlink ratio 1.

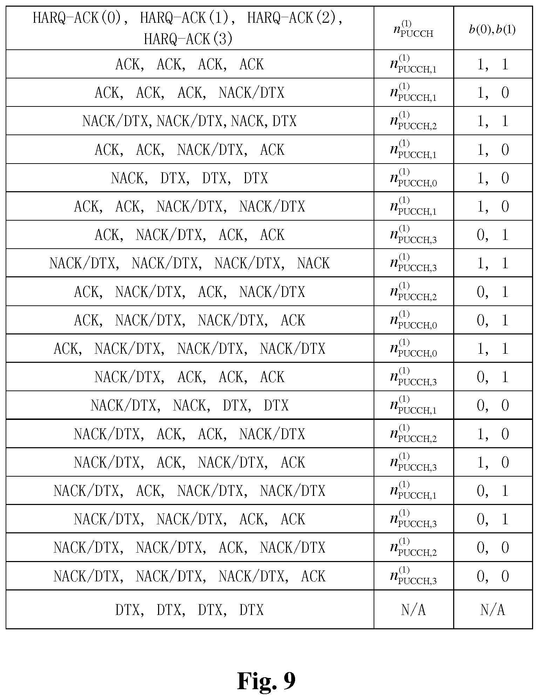

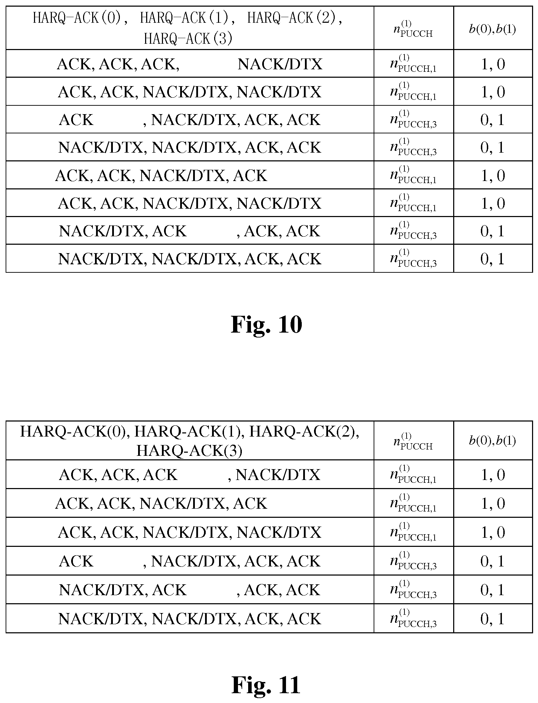

No matter the Bundling manner or the Multiplexing manner, when the ACK/NACK of the PDSCH is fed back through the PUCCH or PUSCH, since there exists a limitation of the number of feedback bits, ambiguity about the feedback will be brought about. For example, under the Bundling manner, as long as one of a plurality of downlink subframes is NACK, NACK is fed back, resulting that the eNB can only consider that the ACK/NACK for all of the downlink subframes is NACK, and has to retransmit all of the downlink subframes. For example, in the case of 4 downlink subframes, there are 3 ambiguous subframes, that the ACK of at most 3 downlink subframes is erroneously decided to be NACK. Similarly, in the case of Multiplexing, PUSCH feedback and double codewords, as long as one codeword in the downlink subframe is NACK, the feedback of the subframe is NACK, and the eNB will consider that both of the codewords are NACK, and retransmit both codewords. For example, in the case of 2 codewords, there is 1 ambiguous codeword, that the ACK of at most 1 downlink subframe is erroneously decided to be NACK. In the case of Multiplexing and PUCCH, besides the probability of the existence of an ambiguous codeword, the case of ambiguous subframe as shown in Fig. 10 and Fig. 11 produced by the mapping relationship of Fig. 9 may exist when M = 4 (see the case where the uplink-to-downlink ratio is set to 2 or 4 in Fig. 4) and the UE has received more than 2 downlink subframes. Fig. 10 is the ambiguity in the time domain when 3 subframes are received and fed back and M = 4, obtained according to Fig. 9, wherein the number of the ambiguous subframes L = 1. Fig. 11 is the ambiguity in the time domain when 4 subframes are received and fed back and M = 4, obtained according to Fig. 9, wherein the number of the ambiguous subframes L = 2. No ambiguous subframes will appear under the mapping relationship of Fig. 7 and Fig. 8.

Currently, there are mainly two research results regarding the application scenario of the two feedback manners, but both have drawbacks.

One is to suggest to configure Multiplexing for a UE at the centre of a cell and having good channel conditions, and to configure Bundling for a UE at the edge of a cell and having bad channel conditions. This is a popular policy now. The policy only takes account of the link performance of the PUCCH or PUSCH *per se* over which the ACK/NACK is fed back. That is, it is considered that the PUCCH or PUSCH is easily limited at the edge of a cell, not being able to bear too many bits. Therefore, the Bundling manner is used to save more feedback resources. However, the channel feature and link performance difference of the PDSCH at the centre and edge of the cell is not taken into consideration. For example, at the centre of a cell, since the channel condition is good, there is no big difference between respective downlink subframes, and the probability of double codewords is relatively large, the use of Bundling is actually enough. At the edge of the cell, since the channel condition is bad, great difference exists between respective downlink subframes, if Bundling is used, the probability of ambiguity in the time domain will increase, resulting in increased probability of invalid retransmission; besides, at the edge of the cell are almost single codeword, there is no need to use Bundling, it is more necessary to use Multiplexing.

The other one is to simulate the performance of Bundling and Multiplexing under different SNRs (Signal Noise Ratio), different speeds of movement, and different target BLER, based on the conditions of closed-loop MIMO (Closed-loop Multiple Input Multiple Output, i.e. TM4 (transfer mode 4) of the PDSCH) and under the premise that the channel condition of each subframe of the PDSCH is consistent and target BLER is the same. The result of simulation shows that the performance difference between the two feedback manners is small, so it is considered that Bundling can handle most of the scenarios. However, due to the limitation of simulation conditions, and that the simulation only considers the PDSCH itself, but not PUCCH and PUSCH, therefore, this simulation is only link-stage simulation but not system-stage simulation. In fact, in the situation where the network commercialization is more and more mature and the load increases dramatically, the interference of each subframe of the PDSCH might differs from each other greatly. For example, the commercial network will universally use a co-frequency networking scheme based on ICIC (Inter-Cell Interference Coordination), and under this networking manner, the network interference will present diversified at the centre or edge of the cell, and is different for different cells. In addition, in the complicated scenarios where the uplink channel condition is limited, the downlink channel fades rapidly, the UE moves fast, etc., the open-loop MIMO (Open-loop Multiple Input Multiple Output, i.e. TM3 (Transfer mode 3) of PDSCH) will also occupy a large proportion of applications. Therefore, under an actual commercial network, it is still difficult to tell the good and bad points of Bundling and Multiplexing, which is moreover related to the particular situation of MMO and uplink-to-downlink ratio. In addition, four-codeword applications might appear in the future, so there are still much theory, simulation and test work to do.

**Summary**

The embodiments of the present invention provide a solution of adjusting a downlink related parameter based on feedback ambiguity, which is capable of better solving the problem of PDSCH performance decrease resulted from the feedback ambiguity of the ACK/NACK of the PDSCH, by judging, collecting statistics on, testing and confirming feedback ambiguity.

According to an embodiment of the present invention, provided is a method for adjusting a downlink related parameter based on feedback ambiguity. The method includes: a base station performing a feedback ambiguity judgment on the basis of acknowledgement (ACK)/negative-acknowledgement (NACK) and channel quality indicator information (CQI) reported by a user equipment (UE), to determine whether there is a probability of feedback ambiguity; when there is a probability of feedback ambiguity, the base station collecting statistics on feedback ambiguity according to a feedback manner, a feedback channel, an ambiguity probability corresponding to the number of downlink received codewords and the number of downlink received subframes of physical downlink shared channel (PDSCH) ; determining whether there is a risk of feedback ambiguity according to result of collecting statistics;

when there is a risk of feedback ambiguity, the base station performing a feedback ambiguity test by scheduling a single subframe or single codeword of PDSCH for a UE, to determine a subframe or codeword with feedback ambiguity;

the base station adjusting a downlink related parameter according to a result of the feedback ambiguity test.

In the described embodiment, the feedback ambiguity includes:

time domain ambiguity, which is a feedback ambiguity where the base station determines all of a plurality of downlink subframes to be NACK since an NACK is obtained after a logic AND operation is performed on ACK/NACKs of the plurality of downlink subframes; and

space domain ambiguity, which is a feedback ambiguity where the base station determines all of a plurality of codewords to be NACK since an NACK is obtained after a logic AND operation is performed on ACK/NACKs of the plurality of codewords of a downlink subframe.

In the described embodiment, the feedback ambiguity judgment includes:

the base station obtaining a statistic block error ratio ($BLER_{statistics}$), according to the ACK/NACK reported by the UE;

the base station obtaining, according to the CQI reported by the UE, a modulation and coding scheme ($MCS_{CQI\_mapping}$) corresponding to the CQI;

when the $BLER_{statistics}$ is greater than or equal to a predetermined proportion of a target block error ratio ($BLER_{target}$), and the $MCS_{CQI\_mapping}$ is greater than or equal to the sum of a downlink assignment modulation and coding scheme ($MCS_{DL\_Assignment}$) and a predetermined offset threshold, the base station determining that there is a probability of feedback ambiguity.

In the described embodiment, the feedback ambiguity statistics collection includes:

the base station obtaining a corresponding ambiguity probability table according to the feedback manner and the feedback channel;

using the ambiguity probability table and the number of the downlink received codewords and the number of the downlink received subframes of the PDSCH to calculate a statistical instantaneous value of a time domain ambiguity probability and/or a statistical instantaneous value of a space domain ambiguity probability of a current moment;

using the statistical instantaneous value of the time domain ambiguity probability and/or the statistical instantaneous value of the space domain ambiguity probability to calculate a statistical smooth value of the time domain probability and/or a statistical smooth value of the space domain ambiguity probability of the current moment; and

when the statistical smooth value of the time domain ambiguity probability is greater than or equal to a risk threshold of time domain ambiguity, and/or the statistical smooth value of the space domain ambiguity probability is greater than or equal to a risk value of the space domain ambiguity, the base station determining that there is a risk of feedback ambiguity.

In the described embodiment, the feedback ambiguity test includes:

the base station setting a feedback manner of the UE to be a Bundling manner, and traversing and scheduling each subframe of the PDSCH, to obtain the ACK/NACK of each subframe and each codeword; and

determining a subframe resulting in the time domain ambiguity and/or a codeword resulting in the space domain ambiguity, according to the ACK/NACK of each subframe and each codeword.

In the described embodiment, adjusting the downlink related parameter includes:

when it is determined that the feedback ambiguity is the space domain ambiguity, the base station performing adjustment processing which includes setting the feedback manner to be a Bundling manner.

In the described embodiment, adjusting the downlink related parameter includes:

when the base station determines the feedback ambiguity is the time domain ambiguity and the space domain ambiguity, the base station performing adjustment processing which includes setting the feedback manner to be a Bundling manner or a Multiplexing manner, and according to the set feedback manner, adjusting downlink adaptive modulation coding (AMC) and/or downlink hybrid automatic retransmission request (HARQ) and/or transfer mode switch (TM Switch) of the PDSCH and/or a target BLER of each downlink PDSCH subframe.

In the described embodiment, the feedback ambiguity test includes:

the base station setting the feedback manner of the UE to be a Multiplexing manner, and performing subframe scheduling, with each subframe being subjected to single codeword scheduling, to obtain the ACK/NACK of each subframe; and
determining a subframe resulting in the time domain ambiguity, according to the ACK/NACK of each subframe.

In the described embodiment, when the UE has a PUSCH resource, the number of subframes scheduled by the base station is smaller than or equal to 4, otherwise, the number of the subframes scheduled by the base station is smaller than or equal to 2.

In the described embodiment, adjusting the downlink related parameter includes:

when it is determined that the feedback ambiguity is the time domain ambiguity, the base station performing adjustment processing which includes setting the feedback manner to be a Multiplexing manner.

According to another embodiment of the present invention, provided is an apparatus for adjusting a downlink related parameter according to feedback ambiguity, wherein the apparatus is located in a base station and includes:

a judgment component, configured to perform a feedback ambiguity judgment on the basis of acknowledgement (ACK)/negative-acknowledgement (NACK) and channel quality indicator information (CQI) reported by a user equipment (UE), to determine whether there is a probability of feedback ambiguity;
a statistics collection component, configured to collect statistics on feedback ambiguity according to a feedback manner, a feedback channel, an ambiguity probability corresponding to the number of downlink received codewords and the number of downlink received subframes of physical downlink shared channel (PDSCH) in the case where the judgment component determines that there is a probability of feedback ambiguity; the statistics collection component being such to determine whether there is a risk of feedback ambiguity according to result of collecting statistics;
a determination component, configured to perform a feedback ambiguity test by performing single subframe or single codeword scheduling of the PDSCH of a UE in the case where the statistics collection component determines that there a risk of feedback ambiguity, to determine a subframe or codeword with feedback ambiguity; and
an adjustment component, configured to adjust a downlink related parameter according to a result of the feedback ambiguity test.

In the described embodiment, the adjustment component further includes:

a Bundling adjustment component, configured to perform adjustment processing which includes setting the feedback manner to be a Bundling manner, when it is determined that the feedback ambiguity is space domain ambiguity; and/or
a Multiplexing adjustment component, configured to perform adjustment processing which includes setting the feedback manner to be a Multiplexing manner, when it is determined that the feedback ambiguity is time domain ambiguity.

By virtue of the solution provided in the embodiments of the present invention, the real condition of the feedback ambiguity may be acquired, and the feedback ambiguity of a corresponding UE is adjusted, avoiding or reducing the feedback ambiguity, thus decreasing invalid retransmission, improving the transmission efficiency and promoting the performance of the PDSCH.

**Brief Description of the Drawings**

Fig. 1 is a schematic diagram of the structure of an LTE TDD frame provided in relevant technology;
Fig. 2 is a schematic diagram of an uplink-to-downlink ratio of an LTE TDD provided in relevant technology;
Fig. 3 is an uplink-to-downlink ratio table of an LTE TDD provided in relevant technology;
Fig. 4 is a schematic diagram of an associated set index $K : \{k_0, k_1, \cdots k_{M-1}\}$ of the LTE TDD provided in relevant technology;
Fig. 5 is a schematic diagram of Bundling feedback of ACK/NACK of a PDSCH of LTE TDD provided in relevant technology;
Fig. 6 is a schematic diagram of Multiplexing feedback of ACK/NACK of a PDSCH of LTE TDD provided in relevant technology;

Fig. 7 is a schematic diagram of a mapping relationship table of the Multiplexing transmission of ACK/NACK where the number of downlink subframes M = 2, provided in relevant technology;

Fig. 8 is a schematic diagram of a mapping relationship table of the Multiplexing transmission of ACK/NACK when M=3, provided in relevant technology;

Fig. 9 is a schematic diagram of a mapping relationship table of the Multiplexing transmission of ACK/NACK when M=4, provided in relevant technology;

Fig. 10 is a schematic diagram of time domain ambiguity when 3 subframes are received and fed back and M = 4, provided in relevant technology;

Fig. 11 is a schematic diagram of time domain ambiguity when 4 subframes are received and fed back and M = 4, provided in relevant technology;

Fig. 12 is a flow chart of a method for adjusting a downlink related parameter based on feedback ambiguity provided by an embodiment of the present invention;

Fig. 13 is a schematic flow chart of an algorithm for adjusting a downlink related parameter based on feedback ambiguity provided by an example embodiment of the present invention;

Fig. 14 is a schematic diagram of a time domain ambiguity probability table using Bundling & PUCCH to feed back when M=4, and the number of ambiguous subframes L = m - 1, provided by an example embodiment of the present invention;

Fig. 15 is a schematic diagram of a time domain ambiguity probability table using Bundling & PUSCH to feed back when M=4, and the number of ambiguous subframes L = m - 1, provided by an example embodiment of the present invention;

Fig. 16 is a schematic diagram of a time domain ambiguity probability table using Multiplexing & PUCCH to feed back when M=4, and the number of ambiguous subframes L = m - 2, provided by an example embodiment of the present invention;

Fig. 17 is a schematic diagram of a space domain ambiguity probability table using Multiplexing & PUCCH to feed back when M=4, and the number of ambiguous codewords J = k - 1, provided by an example embodiment of the present invention;

Fig. 18 is a schematic diagram of a space domain ambiguity probability table using Multiplexing & PUSCH to feed back when M=4, and the number of ambiguous codewords J = k - 1, provided by an example embodiment of the present invention;

Fig. 19 is a structural block diagram of an apparatus for adjusting a downlink related parameter based on feedback ambiguity provided by an embodiment of the present invention; and

Fig. 20 is a structural block diagram of an apparatus for adjusting a downlink related parameter based on feedback ambiguity provided by an example embodiment of the present invention.

## Detailed Description of the Embodiments

Description is made in detail to example embodiments of the present invention in conjunction with the figures, and it should be understand that the example embodiments of following description are just used for illustrate and explain the present invention, but not for limit the present invention.

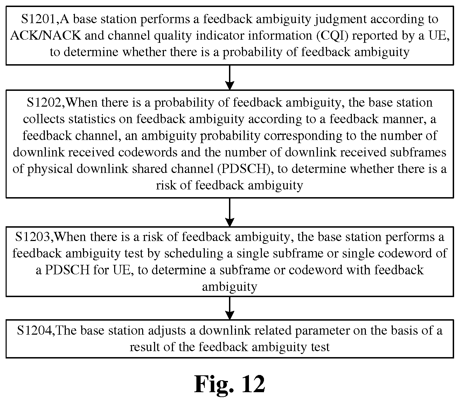

Due to the existence of feedback ambiguity, eNB performs invalid downlink retransmission, thus reducing the transmission efficiency of an air interface, which is a great waste to precious wireless resources. In addition, the current policies of using the feedback manner are substantially conclusions derived forward, starting from the channel condition and link performance of the channel *per se,* which can even be called a guess, and thus is not reliable. The embodiments of the present invention start from reverse analysis, deeply identify feedback ambiguity, acquire the real condition of feedback ambiguity by three steps of feedback ambiguity judgment, feedback ambiguity statistics collection and feedback ambiguity test, and then determine the characteristic of feedback ambiguity (divided into time domain ambiguity and space domain ambiguity), thereby adjusting the feedback ambiguity of the UE, including optimizing "feedback manner, the scheduling resource of the PDSCH (divided into time domain and space domain, i.e. subframe and codeword), downlink AMC (Adaptive Modulation Coding), downlink HARQ (Hybrid Automatic Repeat Request), the TM Switch (Transfer Mode Switch, including switch between single codeword and double codewords) of the PDSCH, target BLER of each downlink PDSCH subframe", etc. Description is made in detail by Fig. 12 to Fig. 18.

Fig. 12 is a flow chart of a method for adjusting a downlink related parameter based on feedback ambiguity provided by an embodiment of the present invention. As shown in Fig. 12, the method includes steps as follows.

Step S1201: a base station performs a feedback ambiguity judgment according to ACK/NACK and channel quality indicator information (CQI) reported by a UE, to determine whether there is a probability of feedback ambiguity.

The feedback ambiguity may include:

time domain ambiguity, which is a feedback ambiguity where the base station determines all of a plurality of downlink subframes to be NACK since an NACK is obtained after a logic AND operation is performed on ACK/NACKs of the plurality of downlink subframes; and

space domain ambiguity, which is a feedback ambiguity where the base station determines all of a plurality of codewords to be NACK since an NACK is obtained after a logic AND operation is performed on ACK/NACKs of the plurality of codewords of a downlink subframe.

In the embodiment of the present invention, the base station obtains a statistic block error ratio $BLER_{statistics}$, according to the ACK/NACK reported by the UE, and obtains, according to the CQI reported by the UE, a modulation and coding scheme ($MCS_{CQI\_mapping}$) corresponding to the CQI. When the $BLER_{statistics}$ is greater than or equal to a predetermined proportion of a target block error ratio $BLER_{target}$, and the $MCS_{CQI\_mapping}$ is greater than or equal to the sum of a downlink assignment modulation and coding scheme $MCS_{DL\_Assignment}$ and a predetermined offset threshold, the base station determines that there is a probability of feedback ambiguity.

Step S1202, when there is a probability of feedback ambiguity, the base station collects statistics on feedback ambiguity according to a feedback manner, a feedback channel, an ambiguity probability corresponding to the number of downlink received codewords and the number of downlink received subframes of physical downlink shared channel (PDSCH), to determine whether there is a risk of feedback ambiguity.

In the described embodiment, the base station obtains a corresponding ambiguity probability table according to the feedback manner and the feedback channel, uses the ambiguity probability table and the number of the downlink received codewords and the number of the downlink received subframes of the PDSCH to calculate a statistical instantaneous value of the time domain ambiguity probability and/or a statistical instantaneous value of the space domain ambiguity probability of the current moment, and uses the statistical instantaneous value of the time domain ambiguity probability and/or the statistical instantaneous value of the space domain ambiguity probability to calculate a smooth value of the time domain probability and/or a smooth value of the space domain ambiguity probability of the current moment. When the smooth value of the time domain ambiguity probability is greater than or equal to a risk threshold of time domain ambiguity, and/or the smooth value of the space domain ambiguity probability is greater than or equal to a risk value of the space domain ambiguity, the base station may determine that there is a risk of feedback ambiguity.

Step S1203, when there is a risk of feedback ambiguity, the base station performs a feedback ambiguity test by performing single subframe or single codeword scheduling of the PDSCH of a UE, to determine a subframe or codeword with feedback ambiguity.

In the described embodiment, the base station sets the feedback manner of the UE to be a Bundling manner, traverses and schedules each subframe of the PDSCH, to obtain the ACK/NACK of each subframe and each codeword, and determines a subframe resulting in the time domain ambiguity and/or a codeword resulting in space domain ambiguity, according to the ACK/NACK of each subframe and each codeword.

Alternatively, the base station sets the feedback manner of the UE to be a Multiplexing manner, performs subframe scheduling, with each subframe being subjected to single codeword scheduling, to obtain the ACK/NACK of each subframe, and determines a subframe resulting in the time domain ambiguity, according to the ACK/NACK of each subframe.

When the feedback manner is Multiplexing manner, the base station determines the number of the scheduled subframes by acquiring whether the UE has a PUSCH resource in advance. When the UE has a PUSCH resource, the number of subframes scheduled by the base station is smaller than or equal to 4, otherwise, the number of the subframes scheduled by the base station is smaller than or equal to 2.

Step S1204, the base station adjusts a downlink related parameter on the basis of a result of the feedback ambiguity test.

When it is determined that the feedback ambiguity is space domain ambiguity, the base station performs adjustment processing which includes setting the feedback manner to be a Bundling manner.

When it is determined that the feedback ambiguity is time domain ambiguity, the base station performs adjustment processing which includes setting the feedback manner to be a Multiplexing manner.

When the base station determines the feedback ambiguity includes both time domain ambiguity and space domain ambiguity, the base station performs adjustment processing which includes setting the feedback manner to be a Bundling manner or a Multiplexing manner, and according to the set feedback manner, adjusts downlink adaptive modulation coding (AMC) and/or downlink hybrid automatic retransmission request (HARQ) and/or transfer mode switch (TM Switch) of the PDSCH and/or a target BLER of each downlink PDSCH subframe, so as to reduce the probability of feedback, thus decreasing invalid retransmission and improving the transmission efficiency.

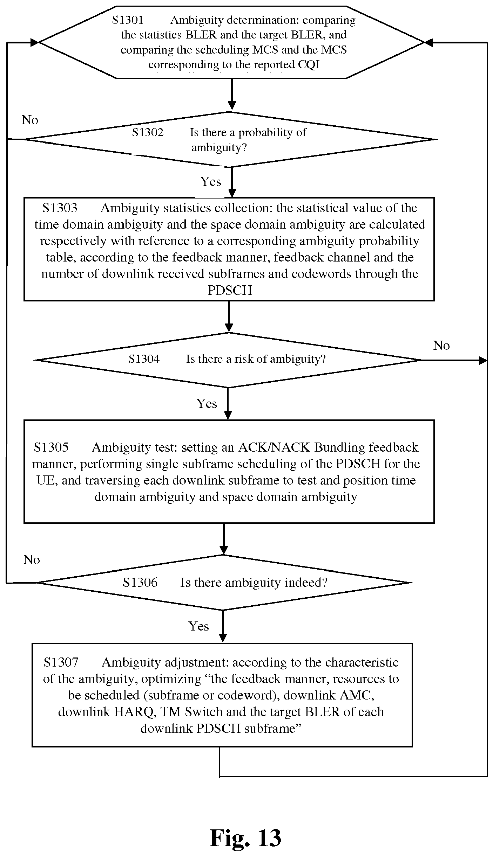

Fig. 13 is a flow chart of an algorithm for adjusting a downlink related parameter based on feedback ambiguity provided by an example embodiment of the present invention. As shown in Fig. 13, the algorithm in the embodiment includes steps as follows.

I. Feedback ambiguity judgment step

Step S1301, the eNB collecting statistics based on the ACK/NACK reported by the UE to obtain the statistics block error ratio ($BLER_{statistics}$), compares the $BLER_{statistics}$ to a predetermined proportion of a target block error ratio ($BLER_{target}$), and compares the actual downlink assignment $MCS_{DL\_Assignment}$ to the theoretical $MCS_{CQI\_mapping}$ corresponding to the CQI reported by the UE (it is required that the $MCS_{DL\_Assignment}$ and the $MCS_{CQI\_mapping}$ are determined on the basis of the same codeword, otherwise the comparison can only be made after converting them into those regarding the same codeword).

Step S1302, when the following formula 1 and formula 2 are satisfied at the same time, it is determined that there is a probability of feedback ambiguity, and it is required to start feedback ambiguity statistics collection, otherwise, it returns to step S1301.

$$BLER_{statistics} \geq \delta \cdot BLER_{t\arg et} \qquad\qquad (\,1\,)$$

$$MCS_{DL\_Assignment} \leq MCS_{CQI\_mapping} - \eta \qquad\qquad (\,2\,)$$

where the $\delta$ is a proportion threshold greater than 0, and it is recommended to be configured to be smaller than 0.5 when the channel quality is good, and it is recommended to be configured to be greater than 0.5 when the channel quality is bad, and it is set to be 0.5 by default. The $\eta$ is an offset threshold greater than 0, and it is recommended to be set to 3.

II. Feedback ambiguity statistics collection step

Step S1303, the statistical smooth value of the time domain ambiguity and the statistical smooth value of the space domain ambiguity are calculated respectively with reference to a corresponding ambiguity probability table, according to the feedback manner, feedback channel and the number of downlink received subframes and the number of downlink received codewords of the PDSCH.

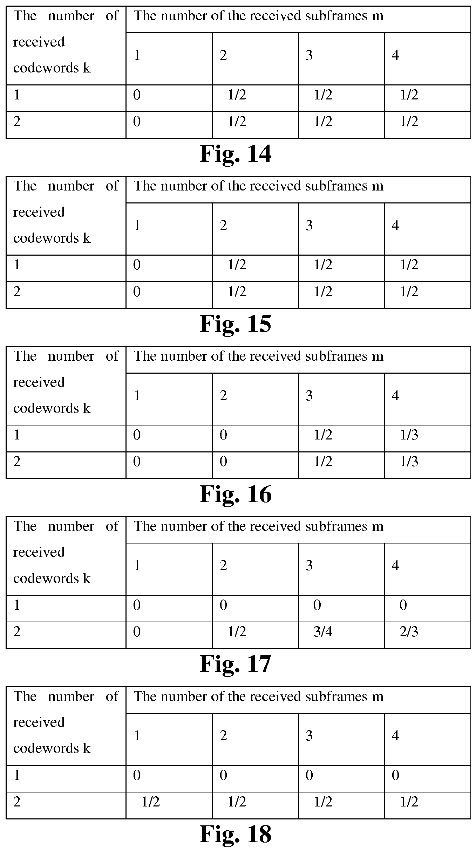

In order to collect quantized statistics on feedback ambiguity, an ambiguity probability is defined in the embodiments of the present invention, i.e. the probability of being fed back to be NACK, but which is ACK in reality. The ambiguity is divided into two types of ambiguity, i.e., time domain ambiguity and space domain ambiguity, which are corresponding to the ambiguity of a subframe and the ambiguity of a codeword. The probability of ambiguity as shown in Figs. 14-18 is the probability of time domain ambiguity derived and corrected to each ambiguous subframe and the probability of space domain ambiguity derived and corrected to each ambiguous codeword on the basis of M = 4 (corresponding to uplink-to-downlink ratio 2 and 4), in combination with the description above, and on the premise that the probability of the appearance of ACK and NACK are equal in default. For example, the table shown in Fig. 16 can be derived according to Fig. 10 and Fig. 11, in particular, Fig. 10 is a scenario where 3 subframes are scheduled and fed back in a Multiplexing manner through the PUCCH (2 bits), with M = 4. All of the four combinations (10, 01, 11, 00) of b(0) and b(1) correspond to two indistinguishable feedback results, wherein the difference between them lies in that the result of a subframe may be ACK and may also be NACK/DTX. In the present case, the number of ambiguous subframe is 1, and the probability of ambiguity is 0.5 (that the probabilities of ACK or NACK/DTX are equal). Moreover, for the case where m = 4 and the probability is 1/3, it can be derived from Fig. 11. The derivation process of other diagrams is the same, which will not be described here.

The probability of feedback ambiguity differs for different feedback manners and/or different feedback channels, therefore, in the following formula 3 to formula 6 for feedback ambiguity statistics collection, it is also necessary to collect statistics for time domain ambiguity and space domain ambiguity with reference to different ambiguity probability tables according to the feedback manner and feedback channel.

$$mis\_t(n) = \sum_{SF=1}^{L} P_{SF} \qquad\qquad (\,3\,)$$

$$MIS\_T(n) = (1-\alpha) \cdot MIS\_T(n-1) + \alpha \cdot mis\_t(n) \qquad\qquad (\,4\,)$$

$$mis\_s(n) = \sum_{Cw=1}^{J} P_{Cw} \qquad (5)$$

$$MIS\_S(n) = (1-\alpha) \cdot MIS\_S(n-1) + \alpha \cdot mis\_s(n) \qquad (6)$$

The $P_{SF}$ is the probability of time domain ambiguity, the L is the number of ambiguous subframes, the $mis\_t(n)$ is the statistical instantaneous value of the probability of time domain ambiguity at the current moment n, the $MIS\_(n)$ is the statistical smooth value of the probability of time domain ambiguity at the current moment n, and the $\alpha$ is a smooth factor the value of which is recommended to be 0.5 in default; the $P_{CW}$ is the probability of time domain ambiguity, the J is the number of ambiguous codewords, the $mis\_s(n)$ is the statistical instantaneous value of the probability of time domain ambiguity at the current moment n, and the $MIS\_S(n)$ is the statistical smooth value of the probability of space domain ambiguity at the current moment n.

Step S1304, if the statistical smooth value of the probability of time domain ambiguity and/or the statistical smooth value of the probability of space domain ambiguity exceed a set threshold, that is, when the following formula 7 and/or formula 8 are satisfied, it is determined that there is a risk of feedback ambiguity, and it is required to perform feedback ambiguity test, accordingly, the feedback ambiguity statistics collection stops and clears; otherwise, it returns to step S1301.

$$MIS\_T(n) \geq \lambda_T \qquad (7)$$

$$MIS\_S(n) \geq \lambda_S \qquad (8)$$

The $\lambda_T$ is the set time domain ambiguity risk threshold, and the $\lambda_S$ is the set space domain ambiguity risk threshold. Based on the cases of Figs. 14-18, the default threshold values thereof are both recommended to be 1, which can be optimized and adjusted in practical applications.

III. Feedback ambiguity test step

Step S1305, the following three test methods may be adopted to perform the feedback ambiguity test.

Method 1

The feedback manner is set to be Bundling, and a single subframe scheduling of the PDSCH is adopted to traverse and schedule each downlink subframe. That is to say, when Bundling is used and scheduling is performed subframe by subframe, the eNB can acquire the real ACK/NACK of each subframe and each codeword. If the eNB always receive a NACK, and it is found from the feedback ambiguity test that only one subframe or one codeword therein is NACK, and others are all ACK, it can be learnt that the NACK of the subframe or codeword affects the ACK of other subframes or codewords to be NACK through logical AND. This method does not change the number of codewords, and does not change the channel condition and the signal noise ratio of a signal, can define time domain ambiguity and space domain ambiguity at the same time, which is easy and reliable.

Method 2

The feedback manner is set to be Multiplexing, and a single codeword scheduling is adopted. If it cannot be ensured that all the UE use the PUSCH to feed back, the number of the subframes to be scheduled will not be more than 2, whereby the time domain ambiguity is accurately positioned. However, if the channel condition which is suitable for double codeword is compelled to be single-codeword, the signal noise ratio of a signal will be changed (increased), and the test result will be unreliable.

Method 3, the feedback manner is set to be Multiplexing, a single codeword scheduling is adopted, and the UE is ensured to feed back via the PUSCH through uplink scheduling. This method can rapidly position time domain ambiguity, but if the channel condition which is suitable for double codeword is compelled to be single-codeword, the signal noise ratio of a signal will be changed (increased), the test result will be unreliable, and the consumption will be great (the PUSCH is required).

By means of feedback ambiguity test, it can be made clear which subframe or which codeword of the UE is ambiguous (which is ACK but is determined to be NACK after the feedback), or there is a very great probability of ambiguity.

Step S1306, whether there is feedback ambiguity indeed is determined by means of any one of the above-mentioned method. If it is determined that there is feedback ambiguity, it is required to adjust the feedback ambiguity, otherwise, it returns to step S1301.

IV. Feedback ambiguity adjustment step

For a UE which is made clear that there is feedback ambiguity after the feedback ambiguity test, according to the time domain or space domain characteristic of the feedback ambiguity, the downlink related parameter will be adjusted, which include optimizing the feedback manner, scheduling resources (which are divided into time domain and space domain, i.e. subframe and codeword), downlink AMC, downlink HARQ, TM Switch, the target BLER of each downlink PDSCH subframe. For example:

1. When the feedback ambiguity of the UE is space domain ambiguity, it is suggested to set the feedback manner to be Bundling. That is to say, when it is found that only the BLER of a certain codeword is high, and the NACK probability thereof is much higher than that of other codewords, then based on the characteristic of this space domain ambiguity, the feedback manner can be modified to be Bundling.

2. When the feedback ambiguity of the UE is time domain ambiguity, it is suggested to set the feedback manner to be Multiplexing. That is to say, when it is found that only the BLER of a certain subframe is high, and the NACK probability thereof is much higher than that of other subframes, then based on the characteristic of this time domain, the feedback manner can be modified to be Multiplexing. At the same time, the MCS of this subframe can be decreased through downlink AMC, the target BLER of this subframe can be decreased to decrease the MCS, and this subframe can be changed from double-codeword to single-codeword through TM Switch (increasing the signal noise ratio, and reducing the NACK ratio), etc.

3. When the feedback ambiguity of the UE has both space domain ambiguity and time domain ambiguity, the feedback manner can be set to Bundling, and can also be set to Multiplexing, but other optimization measures should be combined. For example, when the feedback manner is set to be Bundling, optimization should be performed for the time domain. The subframe, the BLER of which is the highest, will not be scheduled or less scheduled, so as to avoid or reduce feedback ambiguity; or the target BLER is decreased to decrease the MCS, so as to decrease the probability of ambiguity; or the subframe is switched to single-codeword in a compelled manner through TM Switch, so as to increase the SNR, and further decrease the probability of ambiguity. When the feedback manner is set to be Multiplexing, it is required to perform optimization processing for the space domain and time domain. For example, the codeword, the BLER of which is the highest, is not scheduled (i.e. being compelled to be single-codeword), so as to increase the SNR, and to further decrease the probability of ambiguity; or the target BLER is reduced to reduce the MCS, so as to further decrease the probability of ambiguity. At the same time, whether to limit the number of subframes to be scheduled can be determined by learning whether the UE has DCIO scheduling (i.e. assignment PUSCH resource). If the UE has no PUSCH resource, the feedback thereof can only be performed over the PUCCH, so the number of the subframes to be scheduled should be limited to be not more than 2 (it is suggested to choose to schedule two subframes with the minimum BLER), so as to avoid feedback ambiguity. If the UE has a PUSCH resource, at most 4 downlink subframes can be scheduled.

When the adjustment of the feedback ambiguity is completed, step S1301 is re-entered to perform feedback ambiguity judgment. In order to avoid excessively frequent ping-pong feedback ambiguity adjustment in a short time, it is possible to increase relevant threshold in feedback ambiguity judgment or feedback ambiguity statistics collection after this feedback ambiguity adjustment, enabling it more difficult to enter the next step. Or a timer is set, and the timer is started after this feedback ambiguity adjustment, and only when the timer times up, step S1301 is re-entered to perform feedback ambiguity judgment.

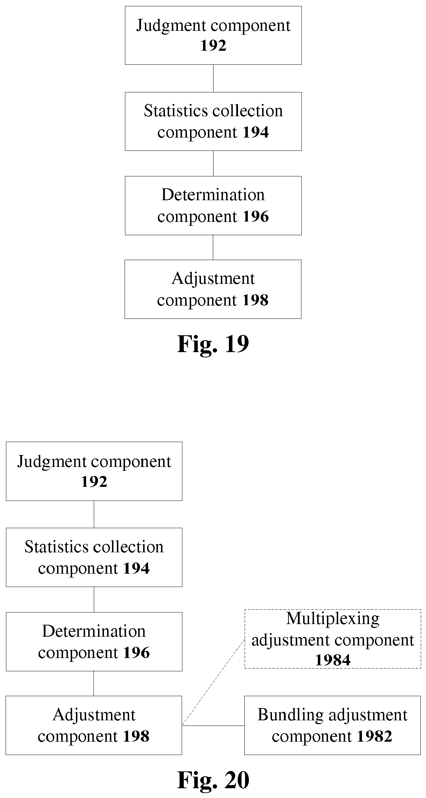

The embodiments of the present invention also provide an apparatus for adjusting a downlink related parameter based on feedback ambiguity. Fig. 19 is a block diagram of the structure of an apparatus for adjusting a downlink related parameter based on feedback ambiguity provided by an example embodiment of the present invention. As shown in Fig. 19, the apparatus is located in the base station, and the apparatus includes: a judgment component **192,** configured to perform a feedback ambiguity judgment on the basis of acknowledgement (ACK)/ negative-acknowledgement (NACK) and channel quality indicator information (CQI) reported by a user equipment (UE), so as to determine whether there is a probability of feedback ambiguity; a statistics collection component **194,** coupled to the judgment component **192,** configured to collect statistics on feedback ambiguity according to a feedback manner, a feedback channel, an ambiguity probability corresponding to the number of downlink received codewords and the number of downlink received subframes of physical downlink shared channel (PDSCH) in the case where the judgment component **192** determines that there is a probability of feedback ambiguity, so as to determine whether there is a risk of feedback ambiguity; a determination component **196,** coupled to the statistics collection component **194,** configured to perform a feedback ambiguity test by performing single subframe or single codeword scheduling of the PDSCH of a UE in the case where the statistics collection component **194** determines that there is a risk of feedback ambiguity, so as to determine a subframe or codeword with feedback ambiguity; and an adjustment component **198,** coupled to the determination component **196,** configured to adjust a downlink related parameter according to a result of the feedback ambiguity test.

Fig. 20 is a block diagram of the structure of an apparatus for adjusting a downlink related parameter based on feedback ambiguity provided by an example embodiment of the present invention. As shown in Fig. 20, the adjustment component **198** further includes: a Bundling adjustment component **1982,** configured to perform adjustment processing which includes setting the feedback manner to be a Bundling manner, when it is determined that the feedback ambiguity is space domain ambiguity; and/or a Multiplexing adjustment component **1984,** configured to perform adjustment processing which includes setting the feedback manner to be a Multiplexing manner, when it is determined that the feedback ambiguity is time domain ambiguity.

In summary, the embodiments of the present invention relate to the performance comparison and improvement of two feedback manners of Bundling and Multiplexing of the ACK/NACK of the PDSCH under LTE TDD of the fourth generation of mobile communication. By means of four steps of feedback ambiguity judgment, feedback ambiguity statistics collection, feedback ambiguity test and feedback ambiguity adjustment, from simple to complex, making checks at all levels, going deeper step by step, no impact will be imposed, when it is unnecessary, to the realization of the current system algorithm of the eNB and the current normal service of the UE as far as possible, so as to accurately discovery, reasonably avoid or reduce feedback ambiguity with minimum realization cost, thereby reducing invalid retransmission, improving the transmission efficiency, and improving the performance of the PDSCH.

Although the description is made in detail to the present invention hereinabove, the present invention is not limited thereto, and various modification can be made by a person skilled in the art according to the principle of the present invention.

## Claims

1.	A method for adjusting a downlink related parameter on the basis of feedback ambiguity, wherein the feedback ambiguity is an ambiguity which downlink subframes or codewords have been correctly received when receiving ACK/NACK feedback, **characterized by** comprising:

	a base station performing a feedback ambiguity judgment on the basis of received acknowledgement (ACK)/negative-acknowledgement (NACK) feedback, the actual downlink assignment MCS, and channel quality indicator information (CQI) reported by a user equipment (UE), to determine whether there is a significant probability of feedback ambiguity (S1201);
	when there is a significant probability of feedback ambiguity, the base station collecting statistics on feedback ambiguity according to a feedback manner, a feedback channel, an ambiguity probability corresponding to the number of downlink received codewords and the number of downlink received subframes of physical downlink shared channel (PDSCH); determining whether there is a risk of feedback ambiguity according to result of collecting statistics (S1202);
	when there is a risk of feedback ambiguity, the base station performing a feedback ambiguity test by scheduling a single subframe or single codeword of PDSCH for a UE, to determine a subframe or codeword with feedback ambiguity (S1203);
	the base station adjusting a downlink related parameter according to a result of the feedback ambiguity test (S1204).

2.	The method according to claim 1, **characterized in that** the feedback ambiguity comprises:

	ime domain ambiguity, which is a feedback ambiguity where the base station determines all of a plurality of downlink subframes to be NACK since an NACK is obtained after a logic AND operation is performed on ACK/NACKs of the plurality of downlink subframes; and
	space domain ambiguity, which is a feedback ambiguity where the base station determines all of a plurality of codewords to be NACK since an NACK is obtained after a logic AND operation is performed on ACK/NACKs of the plurality of codewords of a downlink subframe.

3.	The method according to claim 2, **characterized in that** the feedback ambiguity judgment comprises:

the base station obtaining a statistic block error ratio ($BLER_{statistics}$), according to the ACK/NACK reported by the UE;

the base station obtaining, according to the CQI reported by the UE, a modulation and coding scheme ($MCS_{CQI\_mapping}$) corresponding to the CQI;

when the $BLER_{statistics}$ is greater than or equal to a predetermined proportion of a target block error ratio ($BLER_{target}$), and the $MCS_{CQI\_mapping}$ is greater than or equal to the sum of a downlink assignment modulation and coding scheme ($MCS_{DL\_Assignment}$) and a predetermined offset threshold, the base station determining that there is a significant probability of feedback ambiguity.

4.  The method according to claim 3, **characterized in that** the feedback ambiguity statistics collection comprises:

the base station obtaining a corresponding ambiguity probability table according to the feedback manner and the feedback channel;

using the ambiguity probability table and the number of the downlink received codewords and the number of the downlink received subframes of the PDSCH to calculate a statistical instantaneous value of a time domain ambiguity probability and/or a statistical instantaneous value of a space domain ambiguity probability of a current moment;

using the statistical instantaneous value of the time domain ambiguity probability and/or the statistical instantaneous value of the space domain ambiguity probability to calculate a statistical smooth value of the time domain probability and/or a statistical smooth value of the space domain ambiguity probability of the current moment; and

when the statistical smooth value of the time domain ambiguity probability is greater than or equal to a risk threshold of time domain ambiguity, and/or the statistical smooth value of the space domain ambiguity probability is greater than or equal to a risk value of the space domain ambiguity, the base station determining that there is a risk of feedback ambiguity.

5.  The method according to claim 4, **characterized in that** the feedback ambiguity test comprises:

the base station setting a feedback manner of the UE to be a Bundling manner, and traversing and scheduling each subframe of the PDSCH, to obtain the ACK/NACK of each subframe and each codeword; and

determining a subframe resulting in the time domain ambiguity and/or a codeword resulting in the space domain ambiguity, according to the ACK/NACK of each subframe and each codeword.

6.  The method according to claim 5, **characterized in that** adjusting the downlink related parameter comprises:

when it is determined that the feedback ambiguity is the space domain ambiguity, the base station performing adjustment processing which comprises setting the feedback manner to be a Bundling manner.

7.  The method according to claim 5, **characterized in that** adjusting the downlink related parameter comprises:

when the base station determines the feedback ambiguity is the time domain ambiguity and the space domain ambiguity, the base station performing adjustment processing which comprises setting the feedback manner to be a Bundling manner or a Multiplexing manner, and according to the set feedback manner, adjusting downlink adaptive modulation coding (AMC) and/or downlink hybrid automatic retransmission request (HARQ) and/or transfer mode switch (TM Switch) of the PDSCH and/or a target BLER of each downlink PDSCH subframe.

8.  The method according to claim 4, **characterized in that** the feedback ambiguity test comprises:

the base station setting the feedback manner of the UE to be a Multiplexing manner, and performing subframe scheduling, with each subframe being subjected to single codeword scheduling, to obtain the ACK/NACK of each subframe; and

determining a subframe resulting in the time domain ambiguity, according to the ACK/NACK of each subframe.

9.  The method according to claim 8, **characterized in that** when the UE has a PUSCH resource, the number of subframes scheduled by the base station is smaller than or equal to 4, otherwise, the number of the subframes scheduled by the base station is smaller than or equal to 2.

10.  The method according to claim 5 or 8 or 9, **characterized in that** adjusting the downlink related parameter comprises:

when it is determined that the feedback ambiguity is the time domain ambiguity, the base station performing adjustment processing which comprises setting the feedback manner to be a Multiplexing manner.

11. An apparatus for adjusting a downlink related parameter according to feedback ambiguity, wherein the feedback ambiguity is an ambiguity which downlink subframes or codewords have been correctly received when receiving ACK/NACK feedback, **characterized in that** the apparatus is located in a base station and comprises:

a judgment component (192), configured to perform a feedback ambiguity judgment on the basis of received acknowledgement (ACK)/negative-acknowledgement (NACK) feedback, the actual downlink assignment MCS, and channel quality indicator information (CQI) reported by a user equipment (UE), to determine whether there is a significant probability of feedback ambiguity;

a statistics collection component (194), configured to collect statistics on feedback ambiguity according to a feedback manner, a feedback channel, an ambiguity probability corresponding to the number of downlink received codewords and the number of downlink received subframes of physical downlink shared channel (PDSCH) in the case where the judgment component determines that there is a significant probability of feedback ambiguity; the statistics collection component being such to determine whether there is a risk of feedback ambiguity according to result of collecting statistics;

a determination component (196), configured to perform a feedback ambiguity test by performing single subframe or single codeword scheduling of the PDSCH of a UE in the case where the statistics collection component determines that there a risk of feedback ambiguity, to determine a subframe or codeword with feedback ambiguity; and

an adjustment component (198), configured to adjust a downlink related parameter according to a result of the feedback ambiguity test.

12. The apparatus according to claim 11, **characterized in that** the adjustment component further comprises:

a Bundling adjustment component (1982), configured to perform adjustment processing which comprises setting the feedback manner to be a Bundling manner, when it is determined that the feedback ambiguity is space domain ambiguity; and/or

a Multiplexing adjustment component, configured to perform adjustment processing which comprises setting the feedback manner to be a Multiplexing manner, when it is determined that the feedback ambiguity is time domain ambiguity.

**Patentansprüche**

1. Verfahren zur Einstellung eines Downlink-assoziierten Parameters auf der Basis von Feedback-Ambiguität, wobei es sich bei der Feedback-Ambiguität um eine Ambiguität handelt, bei der Downlink-Subrahmen oder -Codewörter korrekt empfangen wurden beim Empfang von ACK/NACK-Feedback, **dadurch gekennzeichnet, dass** das Verfahren umfasst:

Durchführen, durch eine Basisstation, einer Feedback-Ambiguitätsbeurteilung auf der Basis von empfangenem Zustimmungs- (ACK, Acknowledgement) Feedback oder Ablehnungs-(NACK, Negative-Acknowledgement) Feedback, des tatsächlichen Downlink-Zuweisungs-Modulations- und Codierungsschemas (MCS) und von Kanalqualitäthinweisinformationen (CQI, Channel Quality Indicator), die von einer Teilnehmereinrichtung (UE, User Equipment) berichtet wurden, um fest zu stellen, ob es eine signifikante Wahrscheinlichkeit für eine Feedback-Ambiguität gibt (S1201);

wenn es eine signifikante Wahrscheinlichkeit für eine Feedback-Ambiguität gibt, Sammeln, durch die Basisstation, von Statistiken zu der Feedback-Ambiguität gemäß einer Feedback-Weise, einem Feedback-Kanal, einer Ambiguitätswahrscheinlichkeit entsprechend der Anzahl von Downlink-empfangenen Codewörtern und der Anzahl von Downlink-empfangenen Subrahmen eines physischen gemeinsam benutzten Downlink-Kanals (PDSCH, Physical Downlink Shared Channel); Feststellen, gemäß dem Ergebnis der gesammelten Statistiken, ob das Risiko einer Feedback-Ambiguität besteht (S1202);

wenn das Risiko einer Feedback-Ambiguität besteht, Durchführen, durch die Basisstation, eines Feedback-Ambiguitätstests durch Planen eines einzelnen Subrahmens oder eines einzelnen Codeworts des PDSCH für eine UE, um einen Subrahmen oder ein Codewort mit Feedback-Ambiguität fest zu stellen (S1203); und

Einstellen, durch die Basisstation, eines Downlink-assoziierten Parameters gemäß einem Ergebnis des Feedback-Ambiguitätstests (S1204).

**2.** Verfahren gemäß Anspruch 1, das **dadurch gekennzeichnet ist, dass** die Feedback-Ambiguität umfasst:

Zeitdomänen-Ambiguität, bei der es sich um eine Feedback-Ambiguität handelt, bei der die Basisstation fest stellt, dass alle aus einer Mehrzahl von Downlink-Subrahmen NACK sind, da ein NACK erhalten wurde, nachdem eine logische UND-Operation an den ACK/NACKs der Mehrzahl von Downlink-Subrahmen durchgeführt worden ist; und

Raumdomänen-Ambiguität, bei der es sich um eine Feedback-Ambiguität handelt, bei der die Basisstation fest stellt, dass alle aus einer Mehrzahl von Codewörtern NACK sind, da ein NACK erhalten wurde, nachdem eine logische UND-Operation an den ACK/NACKs der Mehrzahl von Codewörtern eines Downlink-Subrahmens durchgeführt worden ist.

**3.** Verfahren gemäß Anspruch 2, das **dadurch gekennzeichnet ist, dass** die Feedback-Ambiguitätsbeurteilung umfasst:

Erhalten, durch die Basisstation, einer statistischen Blockfehlerratio ($BLER_{statistics}$, Block Error Ratio) gemäß dem von der UE berichteten ACK/NACK;

Erhalten, durch die Basisstation, gemäß den von der UE berichteten CQI, eines Modulations- und Codierungsschemas ($MCS_{CQI\_mpping}$) entsprechend den CQI;

wenn die $BLER_{statistics}$ größer oder gleich einem vorbestimmten Anteil einer Ziel-Blockfehlerratio ($BLER_{target}$) ist, und und das $MCS_{CQI\_mpping}$ größer oder gleich der Summe aus einem Downlink-Zuweisungs-Modulations- und Codierungsschema ($MCS_{DL\_assignment}$) und einem vorbestimmten Offset-Grenzwert ist, Feststellen, durch die Basisstation, dass es eine signifikante Wahrscheinlichkeit für eine Feedback-Ambiguität gibt.

**4.** Verfahren gemäß Anspruch 3, das **dadurch gekennzeichnet ist, dass** das Sammeln der Feedback-Ambiguitätsstatistiken umfasst:

Erhalten, durch die Basisstation, einer entsprechenden Ambiguitätswahrscheinlichkeitstabelle gemäß der Feedback-Weise und dem Feedback-Kanal;

Verwenden der Ambiguitätswahrscheinlichkeitstabelle und der Anzahl von Downlink-empfangenen Codewörtern sowie der Anzahl der Downlink-empfangenen Subrahmen des PDSCH, um einen statistischen Momentanwert einer Zeitdomänen-Ambiguitätswahrscheinlichkeit und/oder einen statistischen Momentanwert einer Raumdomänen-Ambiguitätswahrscheinlichkeit eines aktuellen Moments zu berechnen;

Verwenden des statistischen Momentanwerts der Zeitdomänen-Ambiguitätswahrscheinlichkeit und/oder des statistischen Momentanwerts der Raumdomänen-Ambiguitätswahrscheinlichkeit, um einen statistischen geglätteten Wert der Zeitdomänen-Ambiguitätswahrscheinlichkeit und/oder einen statistischen geglätteten Wert der Raumdomänen-Ambiguitätswahrscheinlichkeit des aktuellen Moments zu berechnen; und

wenn der statistische geglättete Wert der Zeitdomänen-Ambiguitätswahrscheinlichkeit größer oder gleich einem Risikogrenzwert der Zeitdomänen-Ambiguität ist und/oder der statistische geglättete Wert der Raumdomänen-Ambiguitätswahrscheinlichkeit größer oder gleich einem Risikogrenzwert der Raumdomänen-Ambiguität ist, Feststellen, durch die Basisstation, dass das Risiko einer Feedback-Ambiguität besteht.

**5.** Verfahren gemäß Anspruch 4, das **dadurch gekennzeichnet ist, dass** der Feedback-Ambiguitätstest umfasst:

Einstellen, durch die Basisstation, einer Feedback-Weise der UE zu einer Bundling-Weise, und Durchlaufen und Planen jedes Subrahmens des PDSCH, um das ACK/NACK von jedem Subrahmen und jedem Codewort zu erhalten, und

Feststellen eines Subrahmens, der in der Zeitdomänen-Ambiguität resultiert, und/oder eines Codeworts, das in der Raumdomänen-Ambiguität resultiert, gemäß dem ACK/NACK von jedem Subrahmen und jedem Codewort.

**6.** Verfahren gemäß Anspruch 5, das **dadurch gekennzeichnet ist, dass** das Einstellen des Downlink-assoziierte Parameters umfasst:

wenn festgestellt wird, dass es sich bei der Feedback-Ambiguität um Zeitdomänen-Ambiguität handelt, Durchführen, durch die Basisstation, einer Einstellungsverarbeitung, die das Einstellen der Feedback-Weise zu einer Bundling-Weise umfasst.

**7.** Verfahren gemäß Anspruch 5, das **dadurch gekennzeichnet ist, dass** das Einstellen des Downlink-assoziierte Parameters umfasst:

wenn durch die Basisstation festgestellt wird, dass es sich bei der Feedback-Ambiguität um Zeitdomänen-Ambiguität und Raumdomänen-Ambiguität handelt, Durchführen, durch die Basisstation, einer Einstellungsverarbeitung, die das Einstellen der Feedback-Weise zu einer Bundling-Weise oder einer Multiplexing-Weise umfasst, und gemäß der eingestellten Feedback-Weise Einstellen von Downlink-adaptiver Modulationscodierung (AMC) und/oder Downlink-hybrider automatischer Wiederholungsanfrage (HARQ) und/oder Transfermodus-Schalten (TM-Switch) des PDSCH und/oder einer Ziel-BLER jedes Downlink-PDSCH-Subrahmens.

8.  Verfahren gemäß Anspruch 4, das **dadurch gekennzeichnet ist, dass** der Feedback-Ambiguitätstest umfasst:

Einstellen, durch die Basisstation, der Feedback-Weise der UE zu einer Multiplexing-Weise und Durchführen einer Subrahmen-Planung, wobei an jedem Subrahmen eine einzelne Codewort-Planung durchgeführt wird, um das ACK/NACK von jedem Subrahmen zu erhalten; und
Feststellen eines Subrahmens, der in der Zeitdomänen-Ambiguität resultiert, gemäß dem ACK/NACK von jedem Subrahmen.

9.  Verfahren gemäß Anspruch 8, das **dadurch gekennzeichnet ist, dass**, wenn die UE eine PUSCH-Ressource aufweist, die Anzahl von Subrahmen, die von der Basisstation geplant werden, kleiner oder gleich 4 ist, andernfalls die Anzahl von Subrahmen, die von der Basisstation geplant werden, kleiner oder gleich 2 ist.

10.  Verfahren gemäß Anspruch 5 oder 8 oder 9, das **dadurch gekennzeichnet ist, dass** das Einstellen des Downlink-assoziierten Parameters umfasst:

wenn festgestellt wird, dass es sich bei der Feedback-Ambiguität um Zeitdomänen-Ambiguität handelt, Durchführen, durch die Basisstation, einer Einstellungsverarbeitung, die das Einstellen der Feedback-Weise zu einer Multiplexing-Weise umfasst.

11.  Vorrichtung zur Einstellung eines Downlink-assoziierten Parameters auf der Basis von Feedback-Ambiguität, wobei es sich bei der Feedback-Ambiguität um eine Ambiguität handelt, bei der Downlink-Subrahmen oder -Codewörter korrekt empfangen wurden beim Empfang von ACK/NACK-Feedback, **dadurch gekennzeichnet, dass** die Vorrichtung umfasst:

eine Beurteilungskomponente (192), die konfiguriert ist zum Durchführen einer Feedback-Ambiguitätsbeurteilung auf der Basis von empfangenem Zustimmungs- (ACK, Acknowledgemen) Feedback oder Ablehnungs-(NACK, Negative-Acknowledgement) Feedback, des tatsächlichen Downlink-Zuweisungs-Modulations- und Codierungsschemas (MCS) und von Kanalqualitäthinweisinformationen (CQI, Channel Quality Indicator), die von einer Teilnehmereinrichtung (UE, User Equipment) berichtet wurden, um fest zu stellen, ob es eine signifikante Wahrscheinlichkeit für eine Feedback-Ambiguität gibt;
eine Statistiksammelkomponente (194), die konfiguriert ist zum Sammeln von Statistiken zu der Feedback-Ambiguität gemäß einer Feedback-Weise, einem Feedback-Kanal, einer Ambiguitätswahrscheinlichkeit entsprechend der Anzahl von Downlink-empfangenen Codewörtern und der Anzahl von Downlink-empfangenen Subrahmen eines physischen gemeinsam benutzten Downlink-Kanals (PDSCH, Physical Downlink Shared Channel), wenn die Beurteilungskomponente feststellt, dass eine signifikante Wahrscheinlichkeit einer Feedback-Ambiguität besteht; wobei die Statistiksammelkomponente derart ausgerichtet ist, dass sie feststellt, ob das Risiko einer Feedback-Ambiguität besteht, gemäß dem Ergebnis der Statistiksammlung;
eine Feststellungskomponente (196), die konfiguriert ist zum Durchführen eines Feedback-Ambiguitätstests durch Durchführen einer einzelnen Subrahmen-Planung oder einer einzelnen Codewort-Planung des PDSCH einer UE, falls die Statistiksammelkomponente feststellt, dass das Risiko einer Feedback-Ambiguität besteht, um einen Subrahmen oder ein Codewort mit Feedback-Ambiguität fest zu stellen; und
eine Einstellungskomponente (198), die konfiguriert ist zum Einstellen eines Downlink-assoziierten Parameters gemäß einem Ergebnis des Feedback-Ambiguitätstests.

12.  Vorrichtung gemäß Anspruch 11, die **dadurch gekennzeichnet ist, dass** die Einstellungskomponente weiterhin umfasst:

eine Bundling-Einstellungskomponente (1982), die konfiguriert ist zum Durchführen einer Einstellungsverarbeitung, die das Einstellen der Feedback-Weise zu einer Bundling-Weise umfasst, wenn festgestellt wird, dass es sich bei der Feedback-Ambiguität um Raumdomänen-Ambiguität handelt; und/oder
eine Multiplexing-Einstellungskomponente, die konfiguriert ist zum Durchführen einer Einstellungsverarbeitung, die das Einstellen der Feedback-Weise zu einer Multiplexing-Weise umfasst, wenn festgestellt wird, dass es sich bei der Feedback-Ambiguität um Zeitdomänen-Ambiguität handelt.

**Revendications**

1. Procédé pour régler un paramètre lié à la liaison descendante sur la base d'une ambiguïté de rétroaction, dans lequel l'ambiguïté de rétroaction est une ambiguïté quant au fait que des sous-trames ou des mots de codes en liaison descendante aient été correctement reçus lors de la réception de la rétroaction ACK/NACK, **caractérisé en ce qu'**il comprend :

   une station de base effectuant un jugement d'ambiguïté de rétroaction sur la base d'une rétroaction reçue d'accusé de réception (ACK)/accusé de réception négatif (NACK), du MCS d'affectation de liaison descendante réel et d'informations d'indicateur de qualité de canal (CQI) rapportées par un équipement utilisateur (UE) pour déterminer s'il y a une probabilité significative d'ambiguïté de rétroaction (S1201) ;
   lorsqu'il y a une probabilité significative d'ambiguïté de rétroaction, la station de base recueillant des statistiques sur l'ambiguïté de rétroaction selon un mode de rétroaction, un canal de rétroaction, une probabilité d'ambiguïté correspondant au nombre de mots de code reçus en liaison descendante et au nombre de sous-trames reçues en liaison descendante du canal partagé en liaison descendante physique (PDSCH) ; en déterminant s'il y a ou non un risque d'ambiguïté de rétroaction selon le résultat du recueil de statistiques (S1201) ;
   lorsqu'il y a un risque d'ambiguïté de rétroaction, la station de base effectuant un test d'ambiguïté de rétroaction en ordonnançant une sous-trame unique ou un mot de code unique du PDSCH pour un UE afin de déterminer une sous-trame ou un mot de code avec une ambiguïté de rétroaction (S 1203) ;
   la station de base réglant un paramètre lié à la liaison descendante selon un résultat du test d'ambiguïté de rétroaction (S1204).

2. Procédé selon la revendication 1, **caractérisé en ce que** l'ambiguïté de rétroaction comprend :

   une ambiguïté dans le domaine temporel, qui est une ambiguïté de rétroaction où la station de base détermine que la totalité d'une pluralité de sous-trames en liaison descendante est un NACK, car un NACK est obtenu après avoir effectué une opération logique ET sur les ACK/NACK de la pluralité de sous-trames en liaison descendante ; et
   une ambiguïté dans le domaine spatial, qui est une ambiguïté de rétroaction où la station de base détermine que la totalité d'une pluralité de mots de code est un NACK, car un NACK est obtenu après avoir effectué une opération logique ET sur des ACK/NACK de la pluralité de mots de code d'une sous-trame en liaison descendante.

3. Procédé selon la revendication 2, **caractérisé en ce que** le jugement d'ambiguïté de rétroaction comprend :

   la station de base qui obtient un ratio d'erreurs de blocs statistique (BLER$_{statistiques}$) selon les ACK/NACK rapportés par l'UE ;
   la station de base qui obtient selon la CQI rapportée par l'UE un schéma de modulation et de codage (MCS$_{CQI\_mappage}$) correspondant à la CQI ;
   lorsque le BLER$_{statistiques}$ est supérieur ou égal à une proportion prédéterminée d'un ratio d'erreurs de blocs cible (BLER$_{cible}$) et que le MCS$_{CQI\_mappage}$ est supérieur ou égal à la somme d'un schéma de modulation et de codage d'affectation en liaison descendante (MCS$_{DL\_Affectation}$) et d'un seuil de décalage prédéterminé, la station de base déterminant qu'il y a une probabilité significative d'ambiguïté de rétroaction.

4. Procédé selon la revendication 3, **caractérisé en ce que** le recueil de statistiques de l'ambiguïté de rétroaction comprend :

   la station de base qui obtient une table de probabilité d'ambiguïté correspondante selon le mode de rétroaction et le canal de rétroaction ;
   l'utilisation de la table de probabilité d'ambiguïté et du nombre de mots de code reçus en liaison descendante et du nombre des sous-trames reçues en liaison descendante du PDSCH pour calculer une valeur statistique instantanée d'une probabilité d'ambiguïté dans le domaine temporel et/ou une valeur statistique instantanée d'une probabilité d'ambiguïté dans le domaine spatial d'un moment courant ;

l'utilisation de la valeur statistique instantanée de la probabilité d'ambiguïté dans le domaine temporel et/ou la valeur statistique instantanée de la probabilité d'ambiguïté dans le domaine spatial pour calculer une valeur statistique uniforme de la probabilité dans le domaine temporel et/ou une valeur statistique uniforme de la probabilité d'ambiguïté dans le domaine spatial du moment courant ; et

lorsque la valeur statistique uniforme de la probabilité d'ambiguïté dans le domaine temporel est supérieure ou égale à un seuil de risque d'ambiguïté dans le domaine temporel et/ou que la valeur statistique uniforme de la probabilité d'ambiguïté dans le domaine spatial est supérieure ou égale à une valeur de risque d'ambiguïté dans le domaine spatial, la station de base déterminant qu'il y a un risque d'ambiguïté de rétroaction.

5. Procédé selon la revendication 4, **caractérisé en ce que** le test d'ambiguïté de rétroaction comprend :

la station de base qui règle un mode de rétroaction de l'UE pour que ce soit un mode de regroupement (« Bundling ») avec déplacement et ordonnancement de chaque sous-trame du PDSCH afin d'obtenir l'ACK/NACK de chaque sous-trame et de chaque mot de code ; et

la détermination d'une sous-trame entraînant l'ambiguïté dans le domaine temporel et/ou d'un mot de code entraînant l'ambiguïté dans le domaine spatial selon l'ACK/NACK de chaque sous-trame et de chaque mot de code.

6. Procédé selon la revendication 5, **caractérisé en ce que** le réglage du paramètre lié à la liaison descendante comprend :

lorsque l'on détermine que l'ambiguïté de rétroaction est l'ambiguïté dans le domaine spatial, la station de base qui effectue un traitement de réglage qui comprend le réglage du mode de rétroaction comme un mode de regroupement (« Bundling »).

7. Procédé selon la revendication 5, **caractérisé en ce que** le réglage du paramètre lié à la liaison descendante comprend :

lorsque la station de base détermine que l'ambiguïté de rétroaction est l'ambiguïté dans le domaine temporel et l'ambiguïté dans le domaine spatial, la station de base qui effectue un traitement de réglage qui comprend le réglage du mode de rétroaction pour qu'il s'agisse d'un mode de regroupement (« Bundling ») ou d'un mode de multiplexage et, selon le mode de rétroaction réglé, le réglage du codage de modulation adaptatif (AMC) de la liaison descendante et/ou la demande de retransmission hybride automatique (HARQ) de la liaison descendante et/ou la commutation du mode de transfert (commutation TM) du PDSCH et/ou d'un BLER cible de chaque sous-trame de PDSCH de la liaison descendante.

8. Procédé selon la revendication 4, **caractérisé en ce que** le test d'ambiguïté de rétroaction comprend :

la station de base qui règle le mode de rétroaction de l'UE pour qu'il s'agisse d'un mode de multiplexage et qui effectue l'ordonnancement des sous-trames, chaque sous trame étant soumise à un ordonnancement en mot de code unique, pour obtenir l'ACK/NACK de chaque sous-trame ; et

la détermination d'une sous-trame entraînant l'ambiguïté dans le domaine temporel selon l'ACK/NACK de chaque sous-trame.

9. Procédé selon la revendication 8, **caractérisé en ce que**, lorsque l'UE a une ressource PUSCH, le nombre de sous-trames ordonnancées par la station de base est inférieur ou égal à 4, autrement le nombre de sous-trames ordonnancées par la station de base est inférieur ou égal à 2.

10. Procédé selon la revendication 5 ou 8 ou 9, **caractérisé en ce que** le réglage du paramètre lié à la liaison descendante comprend :

lorsque l'on détermine que l'ambiguïté de rétroaction est l'ambiguïté dans le domaine temporel, la station de base qui effectue un traitement de réglage qui comprend le réglage du mode de rétroaction de manière qu'il s'agisse d'un mode de multiplexage.

11. Appareil pour régler un paramètre lié à la liaison descendante selon une ambiguïté de rétroaction, dans lequel l'ambiguïté de rétroaction est une ambiguïté sur le fait que les sous-trames ou les mots de code de la liaison descendante ont été correctement reçus lors de la réception de la rétroaction d'ACK/NACK, **caractérisé en ce que** l'appareil est situé dans une station de base et comprend :

un composant de jugement (192) configuré pour effectuer un jugement d'ambiguïté de rétroaction sur la base de la rétroaction reçue d'accusé de réception (ACK)/accusé de réception négatif (NACK), du MCS d'affectation de la liaison descendante réel et des informations d'indicateur de qualité de canal (CQI) rapportées par un équipement utilisateur (UE) pour déterminer s'il y a ou non une probabilité significative d'ambiguïté de rétroaction ;

un composant de recueil de statistiques (194) configuré pour recueillir des statistiques sur l'ambiguïté de rétroaction selon un mode de rétroaction, un canal de rétroaction, une probabilité d'ambiguïté correspondant au nombre de mots de code reçus en liaison descendante et au nombre de sous-trames reçues en liaison descendante du canal partagé en liaison descendante physique (PDSCH) dans le cas où le composant de jugement détermine qu'il y a une probabilité significative d'ambiguïté de rétroaction ; le composant de recueil de statistiques étant tel que l'on détermine s'il y a ou non un risque d'ambiguïté de rétroaction selon le résultat du recueil de statistiques ;

un composant de détermination (196) configuré pour effectuer un test d'ambiguïté de rétroaction en effectuant un ordonnancement en sous-trame unique ou en mot de code unique du PDSCH d'un UE dans le cas où le composant de recueil de statistiques détermine qu'il y a un risque d'ambiguïté de rétroaction pour déterminer une sous-trame ou un mot de code ayant une ambiguïté de rétroaction ; et

un composant de réglage (198) configuré pour régler un paramètre lié à la liaison descendante selon un résultat du test d'ambiguïté de rétroaction.

12. Appareil selon la revendication 11, **caractérisé en ce que** le composant de réglage comprend en outre :

un composant de réglage de regroupement (« Bundling ») (1982) configuré pour effectuer un traitement de réglage qui comprend le réglage du mode de rétroaction pour qu'il s'agisse d'un mode de regroupement (« Bundling ») lorsque l'on détermine que l'ambiguïté de rétroaction est une ambiguïté dans le domaine spatial ; et/ou

un composant de réglage de multiplexage configuré pour effectuer un traitement de réglage qui comprend le réglage du mode de rétroaction pour qu'il s'agisse d'un mode de multiplexage lorsque l'on détermine que l'ambiguïté de rétroaction est une ambiguïté dans le domaine temporel.

One radio frame, $T_f = 307200T_s = 10$ ms

One half-frame, $153600T_s = 5$ ms

One slot,
$T_{slot} = 15360T_s$

$30720T_s$

| Subframe #0 | | | | Subframe #2 | Subframe #3 | Subframe #4 | Subframe #5 | | | | Subframe #7 | Subframe #8 | Subframe #9 |

One
Subframe,
$30720T_s$   DwPTS GP    UpPTS

DwPTS   GP    UpPTS

**Fig. 1**

**Fig. 2**

| Uplink-downlink Configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

# Fig. 3

| UL-DL Configuration | Subframe n | | | | | | | | | |
|---|---|---|---|---|---|---|---|---|---|---|
| | 0 | 1 | 2 | 3 | 4 | 5 | 6 | 7 | 8 | 9 |
| 0 | – | – | 6 | – | 4 | – | – | 6 | – | 4 |
| 1 | – | – | 7, 6 | 4 | – | – | – | 7, 6 | 4 | – |
| 2 | – | – | 8, 7, 4, 6 | – | – | – | – | 8, 7, 4, 6 | – | – |
| 3 | – | – | 7, 6, 11 | 6, 5 | 5, 4 | – | – | – | – | – |
| 4 | – | – | 12, 8, 7, 11 | 6, 5, 4, 7 | – | – | – | – | – | – |
| 5 | – | – | 13, 12, 9, 8, 7, 5, 4, 11, 6 | – | – | – | – | – | – | – |
| 6 | – | – | 7 | 7 | 5 | – | – | 7 | 7 | – |

# Fig. 4

**Fig. 5**

**Fig. 6**

| HARQ-ACK(0), HARQ-ACK(1) | $n^{(1)}_{\mathrm{PUCCH}}$ | $b(0), b(1)$ |
|---|---|---|
| ACK, ACK | $n^{(1)}_{\mathrm{PUCCH,1}}$ | 1, 1 |
| ACK, NACK/DTX | $n^{(1)}_{\mathrm{PUCCH,0}}$ | 0, 1 |
| NACK/DTX, ACK | $n^{(1)}_{\mathrm{PUCCH,1}}$ | 0, 0 |
| NACK/DTX, NACK | $n^{(1)}_{\mathrm{PUCCH,1}}$ | 1, 0 |
| NACK, DTX | $n^{(1)}_{\mathrm{PUCCH,0}}$ | 1, 0 |
| DTX, DTX | N/A | N/A |

**Fig. 7**

| HARQ-ACK(0), HARQ-ACK(1), HARQ-ACK(2) | $n^{(1)}_{\mathrm{PUCCH}}$ | $b(0), b(1)$ |
|---|---|---|
| ACK, ACK, ACK | $n^{(1)}_{\mathrm{PUCCH,2}}$ | 1, 1 |
| ACK, ACK, NACK/DTX | $n^{(1)}_{\mathrm{PUCCH,1}}$ | 1, 1 |
| ACK, NACK/DTX, ACK | $n^{(1)}_{\mathrm{PUCCH,0}}$ | 1, 1 |
| ACK, NACK/DTX, NACK/DTX | $n^{(1)}_{\mathrm{PUCCH,0}}$ | 0, 1 |
| NACK/DTX, ACK, ACK | $n^{(1)}_{\mathrm{PUCCH,2}}$ | 1, 0 |
| NACK/DTX, ACK, NACK/DTX | $n^{(1)}_{\mathrm{PUCCH,1}}$ | 0, 0 |
| NACK/DTX, NACK/DTX, ACK | $n^{(1)}_{\mathrm{PUCCH,2}}$ | 0, 0 |
| DTX, DTX, NACK | $n^{(1)}_{\mathrm{PUCCH,2}}$ | 0, 1 |
| DTX, NACK, NACK/DTX | $n^{(1)}_{\mathrm{PUCCH,1}}$ | 1, 0 |
| NACK, NACK/DTX, NACK/DTX | $n^{(1)}_{\mathrm{PUCCH,0}}$ | 1, 0 |
| DTX, DTX, DTX | N/A | N/A |

**Fig. 8**

| HARQ-ACK(0), HARQ-ACK(1), HARQ-ACK(2), HARQ-ACK(3) | $n^{(1)}_{PUCCH}$ | $b(0), b(1)$ |
|---|---|---|
| ACK, ACK, ACK, ACK | $n^{(1)}_{PUCCH,1}$ | 1, 1 |
| ACK, ACK, ACK, NACK/DTX | $n^{(1)}_{PUCCH,1}$ | 1, 0 |
| NACK/DTX, NACK/DTX, NACK, DTX | $n^{(1)}_{PUCCH,2}$ | 1, 1 |
| ACK, ACK, NACK/DTX, ACK | $n^{(1)}_{PUCCH,1}$ | 1, 0 |
| NACK, DTX, DTX, DTX | $n^{(1)}_{PUCCH,0}$ | 1, 0 |
| ACK, ACK, NACK/DTX, NACK/DTX | $n^{(1)}_{PUCCH,1}$ | 1, 0 |
| ACK, NACK/DTX, ACK, ACK | $n^{(1)}_{PUCCH,3}$ | 0, 1 |
| NACK/DTX, NACK/DTX, NACK/DTX, NACK | $n^{(1)}_{PUCCH,3}$ | 1, 1 |
| ACK, NACK/DTX, ACK, NACK/DTX | $n^{(1)}_{PUCCH,2}$ | 0, 1 |
| ACK, NACK/DTX, NACK/DTX, ACK | $n^{(1)}_{PUCCH,0}$ | 0, 1 |
| ACK, NACK/DTX, NACK/DTX, NACK/DTX | $n^{(1)}_{PUCCH,0}$ | 1, 1 |
| NACK/DTX, ACK, ACK, ACK | $n^{(1)}_{PUCCH,3}$ | 0, 1 |
| NACK/DTX, NACK, DTX, DTX | $n^{(1)}_{PUCCH,1}$ | 0, 0 |
| NACK/DTX, ACK, ACK, NACK/DTX | $n^{(1)}_{PUCCH,2}$ | 1, 0 |
| NACK/DTX, ACK, NACK/DTX, ACK | $n^{(1)}_{PUCCH,3}$ | 1, 0 |
| NACK/DTX, ACK, NACK/DTX, NACK/DTX | $n^{(1)}_{PUCCH,1}$ | 0, 1 |
| NACK/DTX, NACK/DTX, ACK, ACK | $n^{(1)}_{PUCCH,3}$ | 0, 1 |
| NACK/DTX, NACK/DTX, ACK, NACK/DTX | $n^{(1)}_{PUCCH,2}$ | 0, 0 |
| NACK/DTX, NACK/DTX, NACK/DTX, ACK | $n^{(1)}_{PUCCH,3}$ | 0, 0 |
| DTX, DTX, DTX, DTX | N/A | N/A |

**Fig. 9**

| HARQ-ACK(0), HARQ-ACK(1), HARQ-ACK(2), HARQ-ACK(3) | $n_{\text{PUCCH}}^{(1)}$ | $b(0), b(1)$ |
|---|---|---|
| ACK, ACK, ACK, NACK/DTX | $n_{\text{PUCCH},1}^{(1)}$ | 1, 0 |
| ACK, ACK, NACK/DTX, NACK/DTX | $n_{\text{PUCCH},1}^{(1)}$ | 1, 0 |
| ACK, NACK/DTX, ACK, ACK | $n_{\text{PUCCH},3}^{(1)}$ | 0, 1 |
| NACK/DTX, NACK/DTX, ACK, ACK | $n_{\text{PUCCH},3}^{(1)}$ | 0, 1 |
| ACK, ACK, NACK/DTX, ACK | $n_{\text{PUCCH},1}^{(1)}$ | 1, 0 |
| ACK, ACK, NACK/DTX, NACK/DTX | $n_{\text{PUCCH},1}^{(1)}$ | 1, 0 |
| NACK/DTX, ACK, ACK, ACK | $n_{\text{PUCCH},3}^{(1)}$ | 0, 1 |
| NACK/DTX, NACK/DTX, ACK, ACK | $n_{\text{PUCCH},3}^{(1)}$ | 0, 1 |

# Fig. 10

| HARQ-ACK(0), HARQ-ACK(1), HARQ-ACK(2), HARQ-ACK(3) | $n_{\text{PUCCH}}^{(1)}$ | $b(0), b(1)$ |
|---|---|---|
| ACK, ACK, ACK, NACK/DTX | $n_{\text{PUCCH},1}^{(1)}$ | 1, 0 |
| ACK, ACK, NACK/DTX, ACK | $n_{\text{PUCCH},1}^{(1)}$ | 1, 0 |
| ACK, ACK, NACK/DTX, NACK/DTX | $n_{\text{PUCCH},1}^{(1)}$ | 1, 0 |
| ACK, NACK/DTX, ACK, ACK | $n_{\text{PUCCH},3}^{(1)}$ | 0, 1 |
| NACK/DTX, ACK, ACK, ACK | $n_{\text{PUCCH},3}^{(1)}$ | 0, 1 |
| NACK/DTX, NACK/DTX, ACK, ACK | $n_{\text{PUCCH},3}^{(1)}$ | 0, 1 |

# Fig. 11

S1201,A base station performs a feedback ambiguity judgment according to ACK/NACK and channel quality indicator information (CQI) reported by a UE, to determine whether there is a probability of feedback ambiguity

S1202,When there is a probability of feedback ambiguity, the base station collects statistics on feedback ambiguity according to a feedback manner, a feedback channel, an ambiguity probability corresponding to the number of downlink received codewords and the number of downlink received subframes of physical downlink shared channel (PDSCH), to determine whether there is a risk of feedback ambiguity

S1203,When there is a risk of feedback ambiguity, the base station performs a feedback ambiguity test by scheduling a single subframe or single codeword of a PDSCH for UE, to determine a subframe or codeword with feedback ambiguity

S1204,The base station adjusts a downlink related parameter on the basis of a result of the feedback ambiguity test

# Fig. 12

S1301    Ambiguity determination: comparing the statistics BLER and the target BLER, and comparing the scheduling MCS and the MCS corresponding to the reported CQI

No

S1302    Is there a probability of ambiguity?

Yes

S1303    Ambiguity statistics collection: the statistical value of the time domain ambiguity and the space domain ambiguity are calculated respectively with reference to a corresponding ambiguity probability table, according to the feedback manner, feedback channel and the number of downlink received subframes and codewords through the PDSCH

S1304    Is there a risk of ambiguity?    No

Yes

S1305    Ambiguity test: setting an ACK/NACK Bundling feedback manner, performing single subframe scheduling of the PDSCH for the UE, and traversing each downlink subframe to test and position time domain ambiguity and space domain ambiguity

No

S1306    Is there ambiguity indeed?

Yes

S1307    Ambiguity adjustment: according to the characteristic of the ambiguity, optimizing "the feedback manner, resources to be scheduled (subframe or codeword), downlink AMC, downlink HARQ, TM Switch and the target BLER of each downlink PDSCH subframe"

**Fig. 13**

| The number of received codewords k | The number of the received subframes m | | | |
|---|---|---|---|---|
| | 1 | 2 | 3 | 4 |
| 1 | 0 | 1/2 | 1/2 | 1/2 |
| 2 | 0 | 1/2 | 1/2 | 1/2 |

**Fig. 14**

| The number of received codewords k | The number of the received subframes m | | | |
|---|---|---|---|---|
| | 1 | 2 | 3 | 4 |
| 1 | 0 | 1/2 | 1/2 | 1/2 |
| 2 | 0 | 1/2 | 1/2 | 1/2 |

**Fig. 15**

| The number of received codewords k | The number of the received subframes m | | | |
|---|---|---|---|---|
| | 1 | 2 | 3 | 4 |
| 1 | 0 | 0 | 1/2 | 1/3 |
| 2 | 0 | 0 | 1/2 | 1/3 |

**Fig. 16**

| The number of received codewords k | The number of the received subframes m | | | |
|---|---|---|---|---|
| | 1 | 2 | 3 | 4 |
| 1 | 0 | 0 | 0 | 0 |
| 2 | 0 | 1/2 | 3/4 | 2/3 |

**Fig. 17**

| The number of received codewords k | The number of the received subframes m | | | |
|---|---|---|---|---|
| | 1 | 2 | 3 | 4 |
| 1 | 0 | 0 | 0 | 0 |
| 2 | 1/2 | 1/2 | 1/2 | 1/2 |

**Fig. 18**

```
                    ┌─────────────────────────┐
                    │   Judgment component    │
                    │          192            │
                    └─────────────────────────┘
                                 │
                    ┌─────────────────────────┐
                    │  Statistics collection  │
                    │     component 194       │
                    └─────────────────────────┘
                                 │
                    ┌─────────────────────────┐
                    │     Determination       │
                    │    component 196        │
                    └─────────────────────────┘
                                 │
                    ┌─────────────────────────┐
                    │      Adjustment         │
                    │    component 198        │
                    └─────────────────────────┘
```

**Fig. 19**

```
         ┌─────────────────────────┐
         │   Judgment component    │
         │          192            │
         └─────────────────────────┘
                      │
         ┌─────────────────────────┐
         │  Statistics collection  │
         │     component 194       │
         └─────────────────────────┘
                      │
         ┌─────────────────────────┐          ┌ ─ ─ ─ ─ ─ ─ ─ ─ ─ ─ ─ ─ ┐
         │     Determination       │              Multiplexing
         │    component 196        │          │ adjustment component     │
         └─────────────────────────┘               1984
                      │           ╲            └ ─ ─ ─ ─ ─ ─ ─ ─ ─ ─ ─ ─ ┘
         ┌─────────────────────────┐  ╲       ┌─────────────────────────┐
         │      Adjustment         │   ╲      │  Bundling adjustment    │
         │    component 198        │──────────│    component 1982       │
         └─────────────────────────┘          └─────────────────────────┘
```

**Fig. 20**